(19) Europäisches Patentamt / European Patent Office / Office européen des brevets

(11) **EP 2 870 042 B1**

(12) **FASCICULE DE BREVET EUROPEEN**

(45) Date de publication et mention de la délivrance du brevet:
**11.09.2019 Bulletin 2019/37**

(21) Numéro de dépôt: **13739769.1**

(22) Date de dépôt: **03.07.2013**

(51) Int Cl.:
**B60W 40/109** (2012.01)      **B60W 40/114** (2012.01)
**B60W 40/105** (2012.01)      **B60W 40/10** (2012.01)

(86) Numéro de dépôt international:
**PCT/FR2013/051571**

(87) Numéro de publication internationale:
**WO 2014/006330 (09.01.2014 Gazette 2014/02)**

(54) **PROCÉDÉ DE DÉTECTION DU SENS DE DÉPLACEMENT D'UN VÉHICULE AUTOMOBILE**

VERFAHREN ZUR ERKENNUNG DER FAHRTRICHTUNG EINES KRAFTFAHRZEUGS

METHOD FOR DETECTING THE DIRECTION OF TRAVEL OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2012 FR 1256522**

(43) Date de publication de la demande:
**13.05.2015 Bulletin 2015/20**

(73) Titulaire: **JTEKT Europe**
**69540 Irigny (FR)**

(72) Inventeurs:
• **CASSAR, Stéphane**
**F-69300 Caluire (FR)**
• **MORETTI, Romain**
**69510 Thurins (FR)**
• **LEYDIER, Luc**
**F-69300 Caluire et Cuire (FR)**

(74) Mandataire: **Chevalier, Renaud Philippe et al**
**Cabinet Germain & Maureau**
**BP 6153**
**69466 Lyon Cedex 06 (FR)**

(56) Documents cités:
DE-A1- 4 223 385      DE-A1-102007 030 431
DE-A1-102011 080 033      US-A- 6 141 605

EP 2 870 042 B1

**Description**

La présente invention se rapporte au domaine général des dispositifs et procédés d'assistance à la conduite d'un véhicule automobile, destinés à faciliter et sécuriser la manoeuvre d'un tel véhicule.

Elle concerne plus particulièrement un procédé de détection du sens de déplacement d'un véhicule automobile, ainsi que l'exploitation de cette information quant au sens de déplacement pour la gestion d'un système de direction assistée, notamment de direction assistée électrique.

Il est connu de détecter le sens de déplacement longitudinal (marche avant ou marche arrière) d'un véhicule au moyen d'un capteur placé au niveau de la boîte de vitesse, une telle information pouvant s'avérer utile à l'accomplissement de diverses fonctions embarquées d'assistance à la conduite dudit véhicule, telles que, par exemple, l'aide au stationnement.

Il est aussi connu de DE 10 2011 080 033 A1 un procédé de détermination du sens de déplacement longitudinal selon le préambule de la revendication 1.

Si un tel mode de détection donne généralement satisfaction, il peut toutefois souffrir de certaines limitations.

A titre d'exemple, la détection peut en effet être inopérante lorsqu'aucun rapport de vitesse n'est engagé, ou bien lorsque le conducteur débraye.

Ainsi, dans certaines circonstances, et par exemple si le conducteur décide de faire reculer son véhicule au point mort dans une légère descente, celui-ci pourrait se voir privé de certaines fonctions d'assistance, au détriment de son confort de conduite, voire de sa sécurité.

Les objets assignés à l'invention visent par conséquent à remédier aux inconvénients susmentionnés et à proposer un nouveau procédé de détection du sens de déplacement longitudinal d'un véhicule qui soit disponible et fiable quelle que soit la situation de vie du véhicule, et en particulier qui puisse fonctionner indépendamment du couplage du moteur aux roues motrices, tout en présentant une relative simplicité de mise en oeuvre.

Les objets assignés à l'invention sont atteints au moyen d'un procédé de détermination du sens de déplacement longitudinal d'un véhicule caractérisé en ce qu'il comprend une étape (a) de collecte d'un premier signal, représentatif d'un premier paramètre de roulage, et dont le signe de la valeur et/ou le signe des variations ne dépend pas du sens de déplacement longitudinal du véhicule, une étape (b) de collecte d'un second signal, représentatif d'un second paramètre de roulage distinct du premier paramètre de roulage, et dont le signe de la valeur et/ou le signe des variations change en fonction du sens de déplacement longitudinal du véhicule, puis une étape (c) de comparaison de signes au cours de laquelle on compare le signe de la valeur, respectivement de la variation, du premier signal au signe de la valeur, respectivement de la variation, du second signal pour en déduire le sens de déplacement longitudinal du véhicule, selon que lesdits signes sont identiques ou au contraire différents, le premier paramètre de roulage considéré est le couple volant, représentatif du couple exercé par le conducteur sur le volant de conduite, lequel est de préférence renseigné par un capteur de couplé placé par exemple sur la colonne de direction.

Avantageusement, en utilisant comme source d'information des signaux reposant sur des paramètres de roulage constamment déterminables, et mis périodiquement à disposition, en toutes circonstances, sur le réseau de bord par divers capteurs ou systèmes embarqués, le procédé conforme à l'invention permet de déterminer en permanence, quelle que soit la situation de vie du véhicule, et ce de façon précise et robuste, à l'aide de signaux fiables, le sens de déplacement dudit véhicule.

De surcroît, cette détection de sens de déplacement est réalisée par une opération particulièrement simple d'analyse de signes, qui ne nécessite que très peu de programmation électronique ou logicielle, et ne requiert aucun ajout, voire aucune présence, de capteur dédié. La mise en oeuvre dudit procédé est donc particulièrement simple et peu onéreuse, et permet même éventuellement d'alléger la charge embarquée sur le véhicule en autorisant l'économie d'un capteur.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon un schéma-bloc fonctionnel, le déroulement d'un procédé de détermination du sens de déplacement d'un véhicule conforme à l'invention.

La figure 2 illustre, selon une vue schématique de dessus, des exemples de situations de vie du véhicule et leur impact sur le signe de certains signaux.

La figure 3 illustre, selon un schéma-bloc fonctionnel, l'utilisation d'un procédé de détermination du sens de déplacement comme moyen de surveillance et de contrôle d'un procédé d'apprentissage permettant de déterminer la position angulaire absolue multi-tours d'un volant de conduite dans un système de direction assistée.

La présente invention concerne un procédé de détermination du sens de déplacement longitudinal d'un véhicule.

Ledit procédé permet avantageusement de déterminer, de manière automatique, si le véhicule concerné, à l'instant concerné, progresse en marche avant ou en marche arrière, et de mettre cette information (« sens de déplacement ») à disposition d'un ou plusieurs calculateurs embarqués susceptibles de l'exploiter, par exemple par l'intermédiaire d'un réseau informatique de bord (Controller Area Network).

Par commodité, on considérera dans ce qui suit qu'une progression en marche avant correspond à une vitesse linéaire positive (V>0), considérée selon la tangente à la trajectoire suivie par le véhicule, et qu'une progression en marche arrière correspond à une vitesse linéaire négative (V<0).

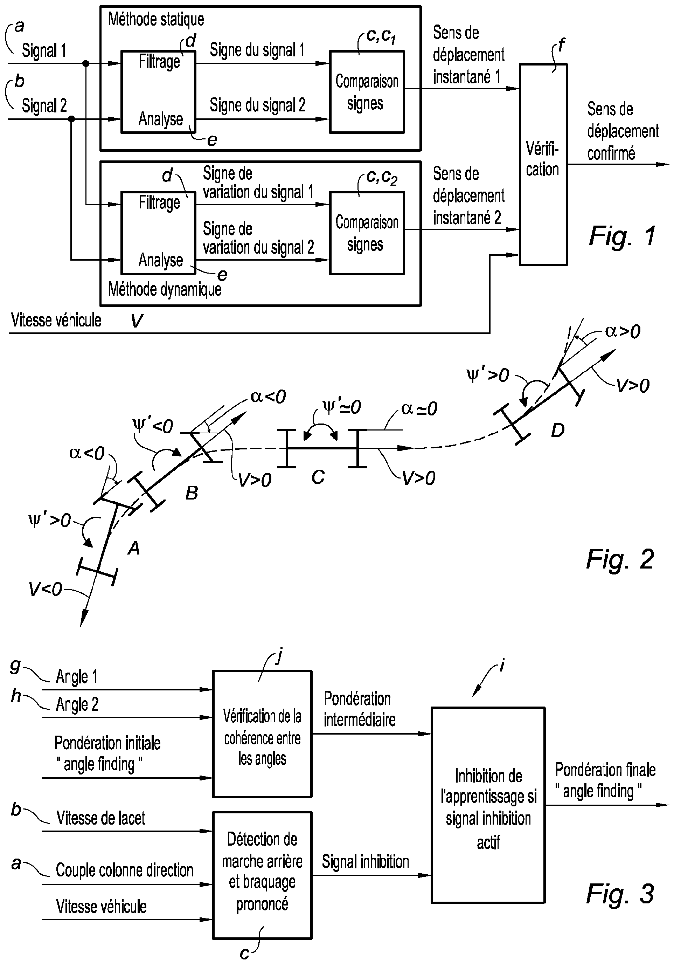

Selon l'invention, et tel que cela est notamment illustré sur la figure 1, le procédé comprend une étape (a) de collecte d'un premier signal *Signal1*, représentatif d'un premier paramètre de roulage, et dont le signe de la valeur et/ou le signe des variations ne dépend pas du sens de déplacement longitudinal du véhicule, une étape (b) de collecte d'un second signal *Signal2*, représentatif d'un second paramètre de roulage distinct du premier paramètre de roulage, et dont le signe de la valeur et/ou le signe des variations change en fonction du sens de déplacement longitudinal du véhicule, puis une étape (c) de comparaison de signes au cours de laquelle on compare le signe de la valeur, respectivement de la variation, du premier signal *Signal1* au signe de la valeur, respectivement de la variation, du second signal *Signal2* pour en déduire le sens de déplacement longitudinal du véhicule (V>0 ou V<0), selon que lesdits signes sont identiques ou au contraire différents.

Par commodité de description, l'expression « *signal* » pourra, le cas échéant, désigner indifféremment dans ce qui suit, sauf précision particulière, aussi bien la valeur quantifiant la grandeur dudit signal (et donc du paramètre associé) à un instant donné, qu'un écart ou un gradient représentatif d'une variation dudit signal, et notamment une dérivée première (voire de degré supérieur) dudit signal par rapport au temps.

Par « *paramètre de roulage* », on considère ici tout paramètre approprié à la mise en oeuvre de la fonction de comparaison, et notamment tout paramètre qui puisse être mesuré directement ou calculé indirectement et qui soit représentatif d'une grandeur physique, notamment cinématique ou dynamique, qui caractérise un aspect du mouvement du véhicule ou d'une consigne qui est appliquée audit véhicule pour son pilotage, sous réserve bien entendu que le comportement du signe dudit paramètre satisfasse à la condition de sensibilité (pour le second paramètre), ou d'insensibilité (pour le premier paramètre) au sens de déplacement.

Avantageusement, le signe du premier signal permet de détecter une première condition de roulage, représentative d'un sous-ensemble de situations de vie possible, et ainsi de fixer un premier élément de référentiel, référentiel dans lequel la connaissance du signe du second paramètre permettra ensuite de déduire, de façon déterministe, compte-tenu des situations de vie qui peuvent exister dans ledit référentiel, le sens de déplacement du véhicule.

La convention employée pourra dépendre de la nature des paramètres retenus.

Ainsi, on pourra par exemple poser, par convention, que le sens de déplacement du véhicule correspond à la marche avant (V>0) lorsque le signe du premier signal *Signal1* est identique au signe du second signal *Signal2*, et, à l'inverse, que le sens de déplacement correspond à une marche arrière (V<0) lorsque les signes des deux signaux sont différents l'un de l'autre, c'est-à-dire opposés. Bien entendu, on pourrait envisager également la convention contraire.

Avantageusement, l'invention permet donc une détection fiable du sens de déplacement, selon une loi particulièrement simple, peu onéreuse à programmer et à mettre en oeuvre.

De préférence, le premier paramètre de roulage considéré sera le couple volant (désigné par l'expression « couple colonne direction » sur la figure 3), représentatif du couple exercé par le conducteur sur le volant de conduite.

Ledit couple volant pourra bien entendu être renseigné par tout moyen d'acquisition approprié. Ainsi, il pourra de préférence être renseigné, et plus particulièrement mesuré directement, par un capteur de couple, par exemple placé sur la colonne de direction ou bien en tout autre emplacement approprié, et appartenant préférentiellement à un système de direction assistée, et notamment de direction assistée électrique. Ledit couple volant pourra également être obtenu indirectement, le cas échéant, par une évaluation reposant sur le traitement, par un calculateur approprié, d'autres signaux disponibles.

Une fois la convention de signe posée pour ce premier signal, afin de pouvoir différencier un couple correspondant à un braquage à droite (ici choisi par convention comme étant de signe négatif) d'un couple de braquage à gauche (choisi comme étant de signe positif), par rapport à la position de conduite normale du véhicule en marche avant, ledit premier signal, ici représentatif d'un tel paramètre de couple volant, contient avantageusement une information permettant d'associer un référentiel gauche/droite au véhicule, en relation avec le sens de déplacement, c'est-à-dire pose une première condition de détermination dudit sens de déplacement.

De préférence, le second paramètre de roulage considéré sera la vitesse de lacet $\psi'$ du véhicule, qui pourra avantageusement être renseignée par un système de contrôle de trajectoire, du genre ESP.

Avantageusement, ce second signal contient une seconde information posant une seconde condition de détermination du sens de déplacement qui, en combinaison avec la première condition procurée par le premier signal, permet de lever l'indétermination quant à la situation de vie dans laquelle se trouve effectivement le véhicule, en restreignant le champ des possibilité à la seule situation qui satisfait simultanément à ces deux conditions.

On comprendra mieux ce cheminement à l'aide de l'exemple illustré sur la figure 2.

On considérera par convention que le couple volant, lié à l'angle de braquage $\alpha$ des roues directrices avant, est positif quand le conducteur tire le volant vers la gauche (lorsqu'il se trouve en position normale de conduite, le regard orienté vers l'avant du véhicule), pour orienter le train avant vers la gauche, positivement dans le sens trigonométrique, et que ledit couple volant est a *contrario* négatif lorsque le volant est tiré vers la droite.

De même, on considérera que la vitesse de lacet $\psi'$ est positive lors d'une rotation du véhicule sur lui-même dans le sens trigonométrique (antihoraire).

Ainsi, si le véhicule progresse en marche arrière (V<0) dans un virage orienté « conventionnellement » à droite par rapport au véhicule (situation 2A), ce qui est signalé par un volant braqué à droite ($\alpha$<0), alors la vitesse de lacet résultante est nécessairement positive ($\psi'$>0).

Réciproquement, la détection simultanée d'un premier signal négatif, signalant un couple volant orienté vers la droite ($\alpha$<0), et d'un second signal positif (c'est-à-dire de signe opposé), signalant une vitesse de lacet positive ($\psi'$>0) et donc un mouvement giratoire antihoraire, indique nécessairement une progression en marche arrière (V<0).

Si, dans ce même virage à droite, le véhicule s'arrête puis repart en marche avant (V>0), on comprend que le volant reste braqué vers la droite ($\alpha$<0), même si l'intensité du braquage peut éventuellement varier, tandis que le sens de rotation en lacet s'inverse, le déplacement induisant en effet, dans le référentiel du sol, une rotation progressive du véhicule sur lui-même dans le sens horaire (situation 2B).

Le changement de sens de déplacement peut donc être détecté par le changement de signe de la vitesse de lacet, qui devient en l'espèce négative ($\psi'$<0).

Plus globalement, le cumul détecté d'un couple négatif de braquage à droite ($\alpha$<0) et d'une vitesse de lacet négative ($\psi'$<0), c'est-à-dire de même signe, signale nécessairement une progression en marche avant (V>0).

Lorsque, à la sortie du virage, le véhicule poursuit sa course en marche avant et en ligne droite (situation 2C), le volant se trouve en principe en position centrée ($\alpha$=0) et la vitesse de lacet est en principe sensiblement nulle ($\psi'$=0), à l'exception éventuelle de légères variations reflétant d'infimes corrections de trajectoire autour de cette situation neutre.

En pareille situation, afin d'éviter toute interprétation erronée due à une possible indétermination liée à la faiblesse des signaux recueillis, en principe sensiblement nuls, le procédé conforme à l'invention pourra avantageusement comprendre, tel que cela sera détaillé ci-après, des étapes de filtrage et/ou de vérification lui permettant d'ignorer des signaux ou des conclusions jugés peu fiables et/ou de prendre des mesures conservatoires adaptées.

Lorsqu'enfin le véhicule aborde un virage à gauche en marche avant (situation 2D), le couple de braquage (vers la gauche) devient strictement positif ($\alpha$>0), de même que la vitesse de lacet ($\psi'$>0).

Ici encore, la détection d'un premier signal et d'un second signal de même signe, en l'espèce tous deux positifs, caractérise une progression en marche avant.

Il est par ailleurs remarquable que l'utilisation de paramètres, ici le couple volant et la vitesse de lacet, d'ores et déjà disponibles sur le réseau de bord CAN, car procurés périodiquement par divers systèmes embarqués (ABS, ESP) distincts de la direction assistée, permet notamment de s'affranchir de l'utilisation, et plus globalement de la présence, d'un capteur spécifique, qui serait dédié exclusivement à la détection du sens de déplacement, ce qui contribue à simplifier et alléger la structure du véhicule.

Selon un premier mode possible de mise en oeuvre (« méthode statique » sur la figure 1), on pourra réaliser, au cours de l'étape (c) de comparaison, une comparaison statique (c1) entre les signes des valeurs instantanées respectives du premier et du second signal *Signal1, Signal2.*

Une telle méthode, qui correspond notamment à l'exemple décrit ci-dessus, permettra avantageusement d'exploiter directement et rapidement des signaux « bruts », tels que fournis par les autres systèmes embarqués (ABS, ESP...), en les analysant pour en extraire leurs signes respectifs puis en comparant lesdits signes.

Selon un autre mode de mise en oeuvre (« méthode dynamique » sur la figure 1), qui peut être appliqué indépendamment ou bien au contraire en complément du précédent mode statique, on pourra réaliser, au cours de l'étape (c) de comparaison, une comparaison dynamique (c2) entre les signes des variations respectives du premier et du second signal.

Selon ce second mode, on pourra notamment examiner, pour le ou les signaux considérés, le signe de l'évolution des valeurs d'un même signal sur une période prédéfinie, par exemple en mesurant l'écart entre deux valeurs dudit signal collectées respectivement lors de deux itérations successives de l'algorithme permettant la mise en oeuvre du procédé.

Bien entendu, on pourra envisager tout traitement du signal approprié au constat et/ou à la quantification d'une variation de signal, tel que par exemple un calcul de la dérivée dudit ou desdits signaux, ou l'application à ceux-ci d'un filtre passe-haut.

De même que ce qui a été envisagé pour la comparaison des valeurs « brutes » des signaux, il est possible de définir une loi de comparaison qui prévoit que si le signe de la variation (par exemple positif pour un accroissement, négatif pur une diminution) du premier signal est identique au signe de la variation du second signal, alors cela signifie le véhicule progresse en marche avant, tandis que si le signe de la variation du premier signal est différent de celui de la variation du second signal, cela signifie que le véhicule progresse en marche arrière.

Avantageusement, il est envisageable de cumuler les deux modes de mise en oeuvre, afin de réaliser, le cas échéant en parallèle, à la fois une comparaison statique (c1) et une comparaison dynamique (c2) à partir des mêmes signaux, puis, le cas échéant, de confronter les résultats issus de chacune de ces méthodes, et ce afin d'améliorer la fiabilité et la précision du procédé.

En particulier, on pourra décider que, si les deux modes fournissent des résultats identiques, c'est-à-dire concluent tous deux au même sens de déplacement, alors le nouveau résultat est considéré comme fiable, et que s'ils fournissent au contraire des résultats divergents, l'un desdits modes concluant à une marche avant et l'autre à une marche arrière, alors le résultat de l'itération en cours doit être écarté, et le résultat de la dernière itération cohérente qui l'a précédée conservé, ce dernier étant ainsi en quelque sorte "prolongé", à titre provisoire, au moins jusqu'à l'itération suivante.

Quel que soit le mode de mise en oeuvre envisagé, le procédé selon l'invention comporte de préférence une étape (d) de filtrage du premier et/ou du second signal au cours de laquelle on compare le premier signal *Signal1,* respectivement le second signal *Signal2*, à un seuil d'acceptation prédéterminé, puis une étape (e) d'analyse et de neutralisation conditionnelle au cours de laquelle on sélectionne, pour l'application de l'étape (c) de comparaison de l'itération n en cours, soit le signe du signal nouvellement collecté au cours de ladite itération *signe[Signal1](n)*, si ledit signal *Signal1* est jugé fiable car supérieur ou égal au seuil d'acceptation, soit au contraire le signe du signal collecté lors de l'itération précédente *signe[Signal1](n-1)*, si ledit signal est jugé douteux car inférieur audit seuil d'acceptation.

Avantageusement, un tel filtrage permet notamment d'éliminer les signaux imperceptibles, noyés dans le bruit de fond, et évite ainsi l'exploitation de données insuffisamment fiables qui risqueraient de fausser le calcul et de conduire à une conclusion erronée quant au sens de déplacement.

Une telle précaution est notamment appréciable dans l'hypothèse où le véhicule progresserait strictement en ligne droite (situation 2C sur la figure 2), de telle sorte que les signaux seraient quasi-nuls, et que leurs amplitudes éventuelles, par exemple résultant de légères corrections de trajectoire oscillant autour de la position neutre, ne correspondraient pas à des manoeuvres franches et ne seraient donc pas suffisantes pour être véritablement significatives.

En pareil cas d'indétermination, faute de disposer de données nouvelles pertinentes pour pouvoir affiner ou mettre à jour de façon fiable son appréciation de la situation de vie du véhicule, l'algorithme exclut donc avantageusement du calcul les signaux douteux et reporte, à titre conservatoire et provisoire, le résultat (signe du signal considéré) de l'itération précédente, c'est-à-dire de la dernière estimation réalisée dans des conditions de fiabilité satisfaisantes.

Bien entendu, sitôt passée cette phase de transition, c'est-à-dire dès qu'intervient un changement suffisamment significatif des conditions de roulage, par exemple lors d'un changement de voie ou de l'engagement du véhicule dans une courbe, ledit changement de situation est immédiatement signalé par le basculement franc du ou des signaux en positif ou en négatif, au-delà de la valeur du seuil d'acceptation, ce qui permet la reprise et la réactualisation, sensiblement en temps réel, de la détection du sens de déplacement.

Le ou les seuils d'acceptation, qui définissent des « bandes mortes » d'exclusion des signaux jugés insuffisamment fiables, pourront avantageusement être réglables.

Le procédé pourra ainsi comporter, préalablement à l'étape de (c) de comparaison, une étape d'ajustement de seuil (non représentée) au cours de laquelle on fixe, et par exemple on sélectionne et/ou l'on modifie, le cas échéant de manière automatique, ledit ou lesdits seuils d'acceptation, par exemple en fonction de la valeur de l'un et/ou l'autre des signaux concernés.

Un tel ajustement permet avantageusement de régler la sensibilité du procédé, en recherchant un compromis entre performance et robustesse. De manière générale, le seuil choisi devra être au moins supérieur au niveau de bruit prévisible du signal concerné, lequel pourra être par exemple mesuré par des campagnes d'essais.

Par ailleurs, selon une autre caractéristique préférentielle qui peut constituer une invention à part entière, le procédé comprend une étape (f) de vérification au cours de laquelle on compare la vitesse linéaire $\underline{V}$ mesurée ou estimée du véhicule à un seuil de vitesse prédéterminé $V_{seuil}$, afin de n'autoriser la validation d'un changement de sens de déplacement, diagnostiqué lors de l'étape (c) de comparaison, qu'à la condition que la vitesse linéaire du véhicule soit inférieure audit seuil de vitesse.

En effet, le changement de sens de déplacement suppose, physiquement, le passage du véhicule par une vitesse linéaire nulle, ce qui se traduit nécessairement, entre les deux itérations successives encadrant l'instant ou se produit ce passage par zéro, par la diminution de la valeur absolue de ladite vitesse mesurée sous un seuil proche de zéro, qui peut être fixé en fonction d'une part de la fréquence d'échantillonnage de l'algorithme et d'autre part des grandeurs maximales prévisibles d'accélération ou de décélération du véhicule.

*A contrario*, tant que la vitesse linéaire du véhicule reste en permanence supérieure audit seuil, il est impossible qu'un changement de sens de déplacement soit intervenu, et toute conclusion contraire, nécessairement erronée, pourrait donc être écartée.

Avantageusement, une telle étape (f) de vérification fournit donc un critère de surveillance supplémentaire, au moyen d'un troisième paramètre de roulage, qui permet de confirmer ou au contraire d'écarter l'interprétation de la situation de vie déterminée par la ou les étapes (c), (c1), (c2) de comparaison, ce qui contribue à améliorer la fiabilité du procédé.

Bien entendu, une telle étape peut notamment être employée seule, ou en combinaison avec les étapes de filtrage et d'analyse susmentionnées, pour obtenir une fiabilité accrue.

Selon une variante préférentielle de mise en oeuvre de l'invention, le procédé de détermination du sens de déplacement fait partie intégrante, tel que cela est illustré sur la figure 3, d'un procédé de détermination de la position angulaire absolue d'un volant de conduite, ce dernier procédé reposant sur au moins un modèle faisant intervenir un paramètre dynamique de roulage du véhicule, tel que la différence de vitesse entre les roues d'un même train roulant, l'accélération latérale du véhicule, ou la vitesse de lacet, et au sein duquel ledit procédé de détermination du sens de déplacement contribue à la détection d'au moins une situation de vie du véhicule, telle qu'une situation de braquage prononcé en marche arrière, considérée comme défavorable à la fiabilité dudit modèle utilisé.

Avantageusement, en cas de détection d'une situation de vie préjudiciable à la précision ou à la fiabilité dudit procédé de détermination de position angulaire absolue du volant, et en particulier en cas de détection de marche arrière dans certaines conditions spécifiques, notamment de braquage, prédéterminées situées en limite ou hors du domaine de validité du modèle utilisé, on pourra prévoir l'émission d'un signal d'inhibition neutralisant ou corrigeant provisoirement le déroulement de l'algorithme de calcul de ladite position angulaire absolue.

De préférence, l'algorithme employé pour la mise en oeuvre du procédé de détermination de la position angulaire absolue du volant est un algorithme de type « angle finding » tel que décrit par exemple dans la demande de brevet FR-2 953 181, déposée par la demanderesse.

Selon cet algorithme, on mesure tout d'abord la position angulaire relative dudit volant, par exemple au moyen d'un capteur de type « resolver » placé sur l'arbre du moteur électrique d'assistance couplé à la colonne de direction, puis on ajoute à cette mesure relative, pour obtenir la position absolue instantanée, multi-tours, du volant, une valeur corrective de décalage (« offset ») qui est calculée comme étant la moyenne pondérée des écarts successivement constatés, au fur et à mesure des itérations, entre d'une part la valeur de position angulaire relative mesurée lors de l'itération considérée, et d'autre part une estimation de la position angulaire absolue du volant, obtenue indirectement par application de lois reposant sur l'analyse de Jeantaud-Ackerman et faisant intervenir des paramètres dynamiques de roulage, tel que l'écart de vitesse entre les roues arrière, renseigné par le système antiblocage de roues ABS, ou encore l'accélération latérale ou la vitesse instantanée de lacet, fournie(s) par le système de contrôle de trajectoire ESP.

A ces écarts sont attribués, pour le calcul du décalage finalement retenu, des coefficients de pondération qui peuvent s'interpréter comme un indice de confiance quant à la précision de l'estimation de la position angulaire absolue, selon l'origine du paramètre utilisé pour le calcul et les conditions de roulage.

Plus particulièrement, le procédé de détermination de la position angulaire du volant pourra comprendre une étape (non représentée) de mesure de position angulaire relative au cours de laquelle on relève, à l'aide d'un capteur embarqué, du genre resolver, de préférence initialisé à zéro lors du démarrage du véhicule, une valeur représentative de la position angulaire relative multi-tours $\theta_{relatif\_volant}$ du volant.

Dans le cas où l'on utilise un tel capteur de type resolver associé à l'arbre du moteur électrique d'assistance de direction, la position angulaire relative du volant peut s'exprimer sous la forme :

$$\theta_{relatif\_volant} = \frac{\theta_{mono\_élec} + N_{tours\_elec} \times 360}{\Gamma \times p}$$

où :

- $\theta_{mono\_elec}$ représente l'« *angle électrique* » absolu, c'est-à-dire la mesure de position angulaire absolue de l'arbre du moteur d'assistance dans un « *tour électrique* », c'est-à-dire dans un cycle de déplacement compris entre deux pôles statoriques successifs dudit moteur, et dont la valeur est par convention comprise entre 0 deg et 359 deg « électriques », étant rappelé que la relation entre l'angle électrique et l'angle mécanique du rotor $\theta_{mono\_méca}$ est donnée par $\theta_{mono\_élec} = p \times \theta_{mono\_méca}$ ;
- $N_{tours\_elec}$ représente le nombre de tours « électriques » effectués par l'arbre du moteur d'assistance, cette variable étant incrémentée de 1 (une unité) à chaque passage de $\theta_{mono\_elec}$ de 359 deg à 0 deg, ou décrémentée à chaque passage de $\theta_{mono\_elec}$ de 0 deg à 359 deg ;
- $p$ est le nombre de paires de pôles statoriques du moteur d'assistance ;
- $\Gamma$ est le rapport de réduction du réducteur assurant l'accouplement entre le moteur d'assistance à la colonne de direction.

Cette mesure relative sera de préférence initialisée lors du démarrage du véhicule, le nombre de tour $N_{tours\_elec}$ étant placé à zéro. La valeur de position électrique mono-tour $\theta_{mono\_elec}$ possède quant à elle une valeur initiale qui peut être comprise entre 0 deg et 359 deg, et qui reflète l'orientation du volant au moment dudit démarrage.

Ainsi, au démarrage (à l'initialisation), la mesure initiale de position angulaire relative multi-tours du volant $\theta_{relatif\_volant}$ vaudra :

$$\theta_{relatif\_volant}(0) = \frac{\theta_{mono\_\acute{e}lec}(0)}{\Gamma \times p}$$

La valeur de position angulaire multi-tours ne pourra du reste jamais être supérieure à la course angulaire maximale du volant de butée à butée.

Le procédé pourra également comprendre une étape (g) de première estimation de position absolue au cours de laquelle on évalue une première valeur *Angle1* représentative de la position angulaire absolue dudit volant au moyen d'un premier modèle reposant sur l'analyse d'au moins un premier paramètre dynamique de roulage du véhicule, tel que la différence de vitesse entre les roues d'un même train roulant, ainsi qu'une étape (h) de seconde estimation de position absolue au cours de laquelle on évalue une seconde valeur *Angle2* représentative de la position angulaire absolue dudit volant au moyen d'un second modèle, distinct du premier modèle et reposant sur l'analyse d'au moins un second paramètre dynamique de roulage du véhicule, tel que la vitesse de lacet et/ou l'accélération latérale.

Ledit procédé peut ensuite comporter une étape (non représentée) de calcul d'offset dynamique brut, au cours de laquelle on calcule une première valeur d'offset dynamique $\Delta\theta_{dynamique(1)}$, respectivement une seconde valeur d'offset dynamique $\Delta\theta_{dynamique(2)}$, correspondant à la différence entre la première valeur *Angle1* représentative de la position angulaire absolue, respectivement la seconde valeur *Angle2* représentative de la position angulaire absolue, et la valeur représentative de la position relative $\theta_{relatif\_volant}$ mesurée pour l'itération $\underline{n}$ en cours, puis une étape (i) de pondération au cours de laquelle on affecte à chaque valeur d'offset dynamique un coefficient de pondération propre *pond_i(n)*, puis une étape d'apprentissage où l'on calcule une valeur finale d'offset $\Delta\theta_{final}(n)$ pour l'itération $\underline{n}$ en cours, qui correspond à la moyenne pondérée de la valeur d'offset final calculée lors de l'itération précédente $\Delta\theta_{final}$(n-1) et affectée du score *sc(n-1)* correspondant à la somme intégrale des coefficients de pondération successivement utilisés sur l'ensemble des itérations précédentes d'une part, et des première et seconde valeurs d'offset dynamique nouvellement calculées pour l'itération en cours $\Delta\theta_{dynamique(i)}(n)$ et affectées de leur coefficient de pondération respectif *pond_i(n)* d'autre part :

$$\Delta\theta_{final}(n) = \frac{\Delta\theta_{final}(n-1) \times sc(n-1) + \sum_{i=1}^{2} \Delta\theta_{dynamique(i)} \times pond_i(n)}{sc(n-1) + \sum_{i=1}^{2} pond_i(n)}$$

$$sc(n) = sc(n-1) + \sum_{i=1}^{2} pond_i(n)$$

La position absolue multi-tours du volant s'exprime alors :

$$\theta_{absolue\ multitours\ volant}(n) = \theta_{relatif\_volant}(n) + \Delta\theta_{final}(n)$$

De façon particulièrement avantageuse, un tel procédé peut également comporter, selon une caractéristique qui peut constituer une invention à part entière, une étape (j) de vérification de cohérence au cours de laquelle on calcule la différence entre la première valeur *Angle1* et la seconde valeur *Angle2* obtenues par les modèles susmentionnés et l'on compare cette différence à un seuil de cohérence S prédéterminé, qui peut être le cas échéant adapté au cas par cas selon la plus faible desdites première et seconde valeurs.

Ainsi, si l'écart |*Angle1- Angle2*| entre lesdites première et seconde valeurs d'angle est inférieur audit seuil $\underline{S}$, lesdites valeurs sont jugées cohérentes entre elles, et leur pondération (non nulle) conservée de manière à ce qu'elles contribuent effectivement à l'apprentissage de la valeur finale d'offset.

*A contrario*, si l'écart entre lesdites valeurs excède ledit seuil, lesdites valeurs sont jugées douteuses car résultant de l'application de l'un au moins des modèles à des conditions situées en limite voire en dehors du domaine de précision acceptable ou de validité dudit modèle, et lesdites valeurs sont alors écartées du calcul d'apprentissage par une annulation forcée de leurs coefficients de pondération respectifs pour l'itération concernée (*pond_i(n)* = 0). Ainsi, les termes correspondant à des valeurs jugées non fiables sont annulés et sans effet sur l'apprentissage.

On pourra ainsi améliorer significativement la fiabilité et la précision dudit apprentissage, et donc plus globalement du procédé de détermination de la position angulaire absolue multi-tours du volant.

En pratique, l'étape (i) de pondération peut donc intégrer une ou plusieurs phases de vérification de la validité des modèles appliqués, et se décomposer notamment en plusieurs sous-étapes successives, ici en au moins trois sous-étapes, correspondant à :

- un premier niveau de pondération (« pondération initiale ») issu d'abaques et dépendant notamment de l'origine du paramètre dynamique utilisé pour le calcul de la valeur de la position angulaire absolue, ainsi que de conditions de roulage, tel que cela est décrit dans la demande FR-2 953 181 susmentionnée ;
- un second niveau de pondération (« pondération intermédiaire ») résultant de l'étape de vérification de la cohérence entre les première et seconde valeurs représentatives de la position angulaire absolue du volant, calculées à partir des paramètres dynamiques par les modèles, ce second niveau de pondération correspondant soit à la pondération initiale si lesdites valeurs sont cohérentes, soit à des coefficients de pondération nuls dans le cas contraire ; et
- un troisième niveau de pondération (« pondération finale », qui sera celle effectivement appliquée au calcul de la moyenne pondérée), qui fait intervenir la détection du sens de déplacement, et qui conserve la pondération intermédiaire (quelle qu'elle soit) en l'absence de signal d'inhibition, ou au contraire force ladite pondération à zéro si un signal d'inhibition est activé suite à la détection de conditions particulières de marche arrière jugées défavorables, par exemple en braquage marqué.

La neutralisation des valeurs douteuses par annulation des coefficients de pondération correspondants peut ainsi résulter soit d'un défaut de cohérence des valeurs d'angles calculées, soit de la détection d'une situation de vie défavorable (ici une marche arrière en braquage prononcé), c'est-à-dire qu'elle peut être décidée, selon une vision booléenne plus globale, si l'une ou l'autre des conditions de non-applicabilité d'un modèle est remplie.

Bien entendu, l'invention n'est nullement limitée à une variante de réalisation particulière, l'homme du métier ayant notamment la possibilité d'isoler ou de combiner entre elles les différentes caractéristiques décrites plus haut.

En particulier, celui-ci pourra adapter l'ordre des différentes étapes susmentionnées, ou bien encore faire intervenir plus de deux signaux et/ou plus de deux paramètres pour la détermination du sens de marche, dès lors que lesdits signaux forment dans leur ensemble un système déterministe, et fixent suffisamment de conditions pour définir sans ambiguïté le sens de déplacement.

Par ailleurs, la présente invention concerne bien entendu également un véhicule automobile, et notamment un véhicule automobile terrestre destiné au transport individuel ou collectif de personnes ou de marchandises, qui embarque un calculateur, du genre module électronique, agencé ou programmé pour mettre en oeuvre un procédé tel que décrit plus haut.

L'invention concerne enfin un programme informatique contenant des éléments de code de programme informatique permettant la mise en oeuvre d'un procédé conforme à l'invention lorsque ledit programme est exécuté sur un calculateur, ainsi qu'un support de données lisible par un calculateur, du genre disque, mémoire flash, clef USB, etc. contenant des éléments de code de programme informatique permettant la mise en oeuvre d'un tel procédé lorsque ledit support est lu par un calculateur.

## Revendications

1.  Procédé de détermination du sens de déplacement longitudinal d'un véhicule comprenant une étape (a) de collecte d'un premier signal (*Signal*1)*,* représentatif d'un premier paramètre de roulage, et dont le signe de la valeur et/ou le signe des variations ne dépend pas du sens de déplacement longitudinal du véhicule, une étape (b) de collecte d'un second signal (*Signal*2), représentatif d'un second paramètre de roulage distinct du premier paramètre de roulage, et dont le signe de la valeur et/ou le signe des variations change en fonction du sens de déplacement longitudinal du véhicule, puis une étape (c) de comparaison de signes au cours de laquelle on compare le signe de la valeur, respectivement de la variation, du premier signal (*Signal*1) au signe de la valeur, respectivement de la variation, du second signal (*Signal*2) pour en déduire le sens de déplacement longitudinal du véhicule, selon que lesdits signes sont identiques ou au contraire différents, **caractérisé en ce que** le premier paramètre de roulage considéré est le couple volant, représentatif du couple exercé par le conducteur sur le volant de conduite, lequel est de préférence renseigné par un capteur de couple placé par exemple sur la colonne de direction.

2.  Procédé selon la revendication 1, **caractérisé en ce que** le second paramètre de roulage considéré est la vitesse de lacet ($\psi$') du véhicule, de préférence renseignée par un système de contrôle de trajectoire du genre ESP.

3.  Procédé selon l'une des revendications précédentes **caractérisé en ce que**, au cours de l'étape (c) de comparaison, on réalise une comparaison statique (c1) entre les signes des valeurs instantanées respectives du premier et du second signal (*Signal*1*, Signal*2)*.*

4.  Procédé selon l'une des revendications précédentes **caractérisé en ce que**, au cours de l'étape (c) de comparaison, on réalise une comparaison dynamique (c2) entre les signes des variations respectives du premier et du second signal.

**5.** Procédé selon l'une des revendications précédentes **caractérisé en ce qu'**il comporte une étape (d) de filtrage du premier et/ou du second signal au cours de laquelle on compare le premier signal (*Signal*1)*,* respectivement le second signal, à un seuil d'acceptation prédéterminé, puis une étape (e) de neutralisation conditionnelle au cours de laquelle on sélectionne, pour l'application de l'étape (c) de comparaison de l'itération en cours (n), soit le signe du signal nouvellement collecté au cours de ladite itération (*signe*[*Signal*1](*n*))*,* si ledit signal (*Signal*1) est jugé fiable car supérieur ou égal au seuil d'acceptation, soit au contraire le signe du signal collecté lors de l'itération précédente (*signe[Signal1](n-1)*)*,* si ledit signal est jugé douteux car inférieur audit seuil d'acceptation.

**6.** Procédé selon l'une des revendications précédentes **caractérisé en ce qu'**il comprend une étape (f) de vérification au cours de laquelle on compare la vitesse linéaire (*V*) mesurée ou estimée du véhicule à un seuil de vitesse prédéterminé {$V_{\text{seuil}}$)*,* afin de n'autoriser la validation d'un changement de sens de déplacement, diagnostiqué lors de l'étape (c) de comparaison, qu'à la condition que la vitesse linéaire du véhicule soit inférieure audit seuil de vitesse.

**7.** Procédé selon l'une des revendications précédentes **caractérisé en ce qu'**il fait partie intégrante d'un procédé de détermination de la position angulaire absolue d'un volant de conduite reposant sur au moins un modèle faisant intervenir un paramètre dynamique de roulage du véhicule, tel que la différence de vitesse entre les roues d'un même train roulant, l'accélération latérale du véhicule, ou la vitesse de lacet, et au sein duquel ledit procédé de détermination du sens de déplacement contribue à la détection d'au moins une situation de vie du véhicule, telle qu'une situation de braquage prononcé en marche arrière, considérée comme défavorable à la fiabilité dudit modèle utilisé.

**8.** Véhicule automobile **caractérisé en ce qu'**il embarque un calculateur agencé ou programmé pour mettre en oeuvre un procédé selon l'une ou l'autre des revendications 1 à 7.

**9.** Support de données lisible par un calculateur et contenant des éléments de code de programme informatique permettant la mise en oeuvre d'un procédé selon l'une ou l'autre des revendications 1 à 7 lorsque ledit support est lu par un calculateur.

**Patentansprüche**

**1.** Verfahren zur Bestimmung der Längsfahrtrichtung eines Fahrzeugs, umfassend einen Schritt (a) zum Erheben eines ersten Signals (Signal1), das repräsentativ für einen ersten Rollparameter ist, und dessen Vorzeichen und/oder Variationszeichen nicht von der Längsfahrtrichtung des Fahrzeugs abhängt, einen Schritt (b) zum Erheben eines zweiten Signals (Signal2), das repräsentativ für einen zweiten Rollparameter ist, der sich von dem ersten Rollparameter unterscheidet, und dessen Vorzeichen und/oder Variationszeichen sich in Abhängigkeit von der Längsfahrtrichtung des Fahrzeugs ändert, danach einen Schritt (c) zum Vergleichen von Zeichen im Laufe dessen man das Vorzeichen, beziehungsweise das Variationszeichen des ersten Signals (Signal1) mit dem Vorzeichen, beziehungsweise dem Variationszeichen des zweiten Signals (Signal2) vergleicht, um daraus die Längsfahrtrichtung des Fahrzeugs abzuleiten, je nachdem ob die Zeichen identisch oder im Gegenteil unterschiedlich sind, **dadurch gekennzeichnet, dass** der erste angenommene Rollparameter das Lenkradmoment ist, das repräsentativ für das Moment ist, das durch den Lenker auf das Fahrlenkrad ausgeübt wird, welches vorzugsweise durch einen Momentsensor mitgeteilt wird, der beispielsweise an der Lenksäule platziert ist.

**2.** Verfahren nach Anspruch 1, **dadurch gekennzeichnet, dass** der zweite angenommene Rollparameter die Giergeschwindigkeit ($\psi'$) des Fahrzeugs ist, die vorzugsweise durch ein Routenkontrollsystem in der Art eines ESP mitgeteilt wird.

**3.** Verfahren nach einem der vorstehenden Ansprüche, **dadurch gekennzeichnet, dass** man im Laufe des Vergleichsschrittes (c) einen statischen Vergleich (c1) zwischen den jeweiligen momentanen Vorzeichen des ersten und zweiten Signals (Signal1, Signal2) realisiert.

**4.** Verfahren nach einem der vorstehenden Ansprüche, **dadurch gekennzeichnet, dass** man im Laufe des Vergleichsschrittes (c) einen dynamischen Vergleich (c2) zwischen den jeweiligen momentanen Variationszeichen des ersten und zweiten Signals realisiert.

**5.** Verfahren nach einem der vorstehenden Ansprüche, **dadurch gekennzeichnet, dass** es einen Schritt (d) zum Filtern des ersten und/oder zweiten Signals beinhaltet, im Laufe dessen man das erste Signal (Signal1), beziehungsweise das zweite Signal, mit einem zuvor bestimmten Annahmeschwellenwert vergleicht, danach einen bedingten Neutralisierungsschritt (e), im Laufe dessen man zur Anwendung des Vergleichsschrittes (c) der im Gange befindlichen Iteration (n) entweder das im Laufe der Iteration (Signe[Signal1](n)) neu erhobene Zeichen des Signals auswählt, wenn das Signal (Signal1) als zuverlässig, weil größer oder gleich dem Annahmeschwellenwert, bewertet wird, oder im Gegenteil das bei der vorherigen Iteration (Signe[Signal1](n-1)) erhobene Zeichen des Signals, wenn das Signal als zweifelhaft, weil kleiner als der Annahmeschwellenwert, bewertet wird.

**6.** Verfahren nach einem der vorstehenden Ansprüche, **dadurch gekennzeichnet, dass** es einen Überprüfungsschritt (f) umfasst, im Laufe dessen man die gemessene oder geschätzte lineare Geschwindigkeit (V) des Fahrzeugs mit einem zuvor bestimmten Geschwindigkeitsschwellenwert {V$_{Seuil}$) vergleicht, um die Bestätigung einer Fahrtrichtungsveränderung, die beim Vergleichsschritt (c) diagnostiziert worden ist, nur unter der Bedingung zuzulassen, dass die lineare Geschwindigkeit kleiner als der Geschwindigkeitsschwellenwert ist.

**7.** Verfahren nach einem der vorstehenden Ansprüche, **dadurch gekennzeichnet, dass** es integraler Bestandteil eines Verfahrens zur Bestimmung der absoluten Winkelposition eines Fahrtlenkrads ist, das auf mindestens einem Modell beruht, das einen dynamischen Rollparameter des Fahrzeugs, wie den Geschwindigkeitsunterschied zwischen den Rädern eines selben Achsaggregats, die Seitenbeschleunigung des Fahrzeugs, oder die Giergeschwindigkeit einbezieht, und innerhalb dessen das Verfahren zur Bestimmung der Fahrtrichtung zur Erkennung mindestens einer Lebenslage des Fahrzeugs, wie einer im Rückwärtsgang ausgedrückten Lenkeinschlagsituation beiträgt, die als ungünstig für die Zuverlässigkeit des verwendeten Modells angesehen wird.

**8.** Kraftfahrzeug, **dadurch gekennzeichnet, dass** es einen Rechner mitträgt, der angeordnet oder programmiert ist, um ein Verfahren nach dem einen oder dem anderen der Ansprüche 1 bis 7 anzuwenden.

**9.** Datenträger, der durch einen Rechner lesbar ist und der Computerprogrammcodeelemente enthält, die die Anwendung eines Verfahrens nach dem einen oder dem anderen der Ansprüche 1 bis 7 ermöglichen, wenn der Träger durch einen Rechner gelesen wird.

## Claims

**1.** A method for determining the direction of longitudinal displacement of a vehicle comprising a step (a) of collecting a first signal (*Signal*1), representative of a first running parameter, and whose sign of the value and/or sign of the variations do/does not depend on the direction of longitudinal displacement of the vehicle, a step (b) of collecting a second signal (*Signal*2), representative of a second running parameter distinct from the first running parameter, and whose sign of the value and/or sign of the variations change/changes depending on the direction of longitudinal displacement of the vehicle, then a step (c) of comparing signs during which the sign of the value, respectively of the variation, of the first signal (*Signal1*) is compared to the sign of the value, respectively of the variation, of the second signal (*Signal2*) to deduce the direction of longitudinal displacement of the vehicle therefrom, according to whether said signs are identical or on the contrary different, **characterized in that** the considered first running parameter is the steering wheel torque, representative of the torque exerted by the driver on the steering wheel, which is preferably given by a torque sensor placed for example on the steering column.

**2.** The determination method according to claim 1, **characterized in that** the considered second running parameter is the yaw rate ($\Psi'$) of the vehicle, preferably given by a trajectory control system of the ESP type.

**3.** The determination method according to any of the preceding claims **characterized in that**, during the comparison step (c), a static comparison (c1) is carried out between the signs of the respective instantaneous values of the first and second signals (*Signal*1, *Signal*2).

**4.** The determination method according to any of the preceding claims **characterized in that**, during the comparison step (c), a dynamic comparison (c2) is carried out between the signs of the respective variations of the first and second signals.

**5.** The determination method according to any of the preceding claims **characterized in that** it includes a step (d) of filtering the first and/or second signal(s) during which the first signal (*Signal*1), respectively the second signal, is compared to a predetermined acceptance threshold, then a conditional neutralization step (e) during which, for the application of the step (c) of comparing the current iteration (n), either the sign of the signal newly collected during said iteration (*signe*[*Signal*1](*n*)), if said signal (*Signal*1) is considered reliable because it is higher than or equal to the acceptance threshold, or, on the contrary, the sign of the signal collected during the previous iteration (*signe*[*Signal*1](*n-1*)), if said signal is considered doubtful because it is below said acceptance threshold, is selected.

6. The determination method according to any of the preceding claims **characterized in that** it comprises a check-up step (f) during which the measured or estimated linear speed (V) of the vehicle is compared to a predetermined speed threshold {$V_{seuil}$}, in order to authorize the validation of a change of direction of displacement, diagnosed during the comparison step (c), only provided that the linear speed of the vehicle is below said speed threshold.

7. The determination method according to any of the preceding claims **characterized in that** it is an integral part of a method for determining the absolute angular position of a steering wheel based on at least one model involving a dynamic running parameter of the vehicle, such as the difference in speed between the wheels of the same running gear, the lateral acceleration of the vehicle, or the yaw rate, and within which said method of determining the direction displacement contributes to the detection of at least one life situation of the vehicle, such as a pronounced turning situation in reverse motion, considered as unfavorable to the reliability of said used model.

8. A motor vehicle **characterized in that** it embeds a calculator arranged or programmed to implement a method according to either one of claims 1 to 7.

9. A data carrier readable by a calculator and containing computer program code elements enabling the implementation of a determination method according to either one of claims 1 to 7 when said carrier is read by a calculator.

## Fig. 1

**Méthode statique**

*a* Signal 1

*b* Signal 2

Filtrage *d* — Signe du signal 1

Analyse — Signe du signal 2 *e*

Comparaison signes *c, c₁*

Sens de déplacement instantané 1

Vérification *f*

Sens de déplacement confirmé

Filtrage *d* — Signe de variation du signal 1

Analyse — Signe de variation du signal 2 *e*

**Méthode dynamique**

Comparaison signes *c, c₂*

Sens de déplacement instantané 2

Vitesse véhicule *V*

## Fig. 2

## Fig. 3

*g* Angle 1

*h* Angle 2

Pondération initiale " angle finding "

Vérification de la cohérence entre les angles *j*

Pondération intermédiaire

*b* Vitesse de lacet

*a* Couple colonne direction

Vitesse véhicule

Détection de marche arrière et braquage prononcé *c*

Signal inhibition

Inhibition de l'apprentissage si signal inhibition actif *i*

Pondération finale " angle finding "

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 102011080033 A1
- FR 2953181